# EUROPEAN PATENT SPECIFICATION

(11) **EP 1 678 252 B1**
(45) Date of publication and mention of the grant of the patent: **28.11.2007**
(21) Application number: 04796821.9
(22) Date of filing: 28.10.2004
(51) Int. Cl.: C08L 23/04, F16L 9/12

(54) **POLYMERIC PIPES MADE FROM BLENDS OF POLYOLEFINS AND VINYL ALCOHOL POLYMERS**
AUS MISCHUNGEN VON POLYOLEFINEN UND VINYLALKOHOLPOLYMEREN HERGESTELLTE POLYMERROHRE
CONDUITES POLYMERES EN MELANGES DE POLYOLEFINES ET DE POLYMERES D'ALCOOL VINYLIQUE

(30) Priority: 30.10.2003 US 516562 P; 27.10.2004 US 974218
(43) Date of publication of application: 12.07.2006
(73) Proprietor: E.I. DUPONT DE NEMOURS AND COMPANY, Wilmington, Delaware 19898 (US)
(72) Inventor: MESTEMACHER, Steven, A., Parkersburg, West Virginia 25104 (US); ROZANT, Olivier, F-74350 Cernex (FR)
(74) Representative: Heinemann, Monica
(86) International application number: PCT/US2004/036113
(87) International publication number: WO 2005/042634

(56) References cited:
- EP-A- 0 015 556
- EP-A- 0 526 230
- EP-A- 0 641 825
- US-A- 4 444 817
- PATENT ABSTRACTS OF JAPAN vol. 2000, no. 09, 13 October 2000 (2000-10-13) & JP 2000 179754 A (MITSUBISHI KAGAKU SANSHI CORP), 27 June 2000 (2000-06-27)

## Description

### Field of the Invention

This invention relates to pipes that provide an enhanced barrier to the permeation of hydrocarbons and hydrocarbon/alcohol mixtures. More particularly, this invention relates to such pipes that comprise a melt-mixed blend of polyolefin, vinyl alcohol polymer, and compatibilizing agents.

### Background of the Invention

Many industrial applications require that a wide variety of materials including solids, liquids, and gases need to be transported through different sorts of pipes under a wide variety of conditions. One feature that all these pipes share is that they must be made from materials that are impermeable and resistant both to the substances being transported and to substances present in the environment surrounding the exterior of the pipes. These substances often contain hydrocarbons and/or alcohols. In many applications, particularly those in the oil and gas industry, water and salt water may also be present in these substances. Pipes used to transport hydrocarbons and/or alcohols have traditionally been made from metal, but it is many cases desirable to make such pipes from polymeric materials, which often offer the advantages of lower cost, lighter weight, resistance to corrosion, and greater design flexibility. However, many polymeric materials are insufficiently impermeable and resistant to hydrocarbons and/or alcohols, particularly the hydrocarbon/alcohol mixtures that comprise many gasoline formulations.

For example, drilled oil wells are typically lined with steel casings. The steel is susceptible to erosion and corrosion, however, and, as a result, these pipes have been lined with plastic liners in both onshore and offshore pipelines. The casing liner must be capable of withstanding temperatures and pressures typically encountered in oil and gas wells, and must have compression and memory properties that allow it to be downsized for insertion into the casing and subsequently permit it to expand to form a fluid tight seal against the casing. Polyethylene pipe is considered to be the preferred material for the fabrication of the casing. In addition to its good compression and memory properties, polyethylene pipe is resistant to abrasion, which enables it to withstand the passage of down-hole tools, and resistant to salt water and some chemical corrosion. Furthermore, polyethylene pipe can be formes into a long, continuous tube containing no joint connections. This is important in that many casing leaks occur in or near the connection between one segment of casing and another. However, for high temperature and aggressive chemical environments, nylon 11 is often used. Performance is much improved, but the cost is such that nylon 11 is only considered for highly demanding applications.

A method for lining steel casings used in well-drilling operations, preferably with polyethylene, for purposes of corrosion protection has been disclosed in Vloedman, U.S. Patent 5,454,419. A procedure is described for reducing a continuous string of polyethylene pipe in diameter and then running it into a casing-lined well bore in such a manner that the polyethylene pipe remains in a reduced state until the polyethylene pipe reaches a pre-selected depth. After the polyethylene pipe is run to the desired depth, the reduced pipe is allowed to rebound, thereby forming a fluid-tight seal with the casing and effectively sealing any breaches in the casing.

While the method disclosed in US Patent 5,454,419 patent has successfully met the need for repairing breaches in casings in an effective and time efficient manner, several inefficiencies have nevertheless been encountered, particularly in circumstances when only a selected segment of the casing is in need of repair. If only a relatively short section of approximately 100 to 2000 feet of casing is in need of repair and this section is located several thousand feet below the surface, for example, it is more cost effective if the casing does not have to be lined entirely from the surface to the pertinent section, and US Patent 6,283,211, also by Vloedman, discloses a method of repairing portions of a pipe.

In other known liner systems, the liner resides in close-tolerance with the host pipe along its length, forming a stable composite system. The installed liner may be either loose-fit or compressed-fit. In all but low pressure applications, the stresses induced by fluid pressure from within the liner are transmitted to the surrounding host tubular and the host tubular resists these transmitted stresses. As hydrocarbon fluids permeate through the liner, there is a resulting build up of pressure in the annulus (the space between the liner and the inside surface of the host pipe) which can directly result in corrosion, leakage and/or liner collapse if the pressure inside the pipe drops below that of the annulus. All are major deficiencies. Where the liner outer surface maintains a significant degree of contact with the inner host wall there is a significant degree of sealing. The annular cross sectional area is thus reduced to the extent that only an extremely tortuous path for the annular fluid's migration toward any venting mechanism along the system exists.

Taylor, U.S. Patent 6,220,079, addresses this problem by disclosing a method of decreasing the negative effects of pressure in the annulus by modification of the liner configuration from its usual uniform cylindrical shape to include the incorporation of multiple conduits between the liner and the host tubular. These conduits provide a relatively inexpensive means for venting the pressure, which can help prevent liner collapse, and also permit the introduction of instruments for making measurements.

Other contributors to the onset of liner collapse include the liner's mechanical properties, the nature of the fluid transported, pressure, temperature, and the effective rate of fluid permeation. The present invention discloses a method of addressing liner collapse by significantly decreasing the rate of fluid permeation through the liner.

The document EP 0 641 825 discloses a laminar article from a polyolefin matrix, ethylene-vinyl-alcohol copolymers and a compatibilizer.

U. S. Patent 4,444,817 discloses laminar articles of polyolefin and a condensation polymer. Despite mention of a wide range of specific articles, there is no teaching of utilizing this material for applications in the field of oil and gas exploration and/or production. U. S. Patent 4,971,864 discloses laminar articles of polyolefin and ethylene/vinyl alcohol copolymers. However, again there is no consideration or suggestion of utilizing this material for applications in the field of oil and gas exploration and/or production or for transporting gasoline and other fuels.

It is an object of the present invention to provide pipes with good permeation resistance to hydrocarbons and alcohols. A feature of the present invention is to melt blend at least one polyolefin, at least one vinyl alcohol polymer, and at least one compatibilizing agent in the process of forming the pipes. It is an advantage of the present invention to provide pipes comprising a low-cost polymeric material that has enhanced barrier properties relative to polyethylene. It is a further advantage of the present invention to provide pipes that have enhanced barrier properties to hydrocarbon/alcohol mixtures. These and other objects, features, and advantages will become better understood upon having reference to the detailed description herein.

### Summary of the Invention

There is disclosed and claimed herein pipes, comprising a melt-mixed blend of:
(a) at least one polyolefin;
(b) at least one vinyl alcohol polymer incompatible with said at least one polyolefin (a); and
(c) at least one alkylcarboxyl-substituted polyolefinic compatibilizer;
wherein said polyolefins (a) are in a continuous matrix phase and said vinyl alcohol polymers (b) are present in a discontinuous distributed phase in the form of a multitude of thin, substantially parallel, and overlapping layers of material embedded in the continuous phase, and further wherein at least a portion of said compatibilizer (c) is present between said layers and promotes adhesion therebetween.

### Detailed Description of the Invention

As used herein, the term "pipe" refers to a hollow, elongated, often cylindrical conduit that is typically used to contain substances that can include fluids, hydrocarbon effluent, finely divided solids, or gases during transport. By "oil and gas applications" is meant uses in the oil and gas industry that involve the removal of fossil fuels such as crude oil and natural gas from the earth and their subsequent transport and refinement. Such applications include, but are not limited to, tubing, casing, siphon strings, line pipe, facility piping, and liners. By "liner" is meant a second layer that is used inside of a steel or other metal pipe, for protection, thus creating a "lined pipe" that is typically a multi-pieced construction of pipe. The term "line pipe" is distinct from a "lined pipe", and is the flow line between wellhead, vessels, pumps, storage facilities, and/or processing facilities. The term "tubular" is used in the oil and gas industry to refer to round pipes used in a variety of applications, including, but not limited to tubing, casing, siphon strings, line pipes, and facility piping.

As used herein when referring to a polymer, the term "particle" refers to the physical form of the bulk polymer and can be a pellet, cube, flake, powder, or other form known to those skilled in the art.

For the purposes of this invention, "incompatible polymers" mean polymeric materials that have substantially no mutual miscibility in the melt form.

The pipe of this invention comprises a polymeric composition that comprises a melt-mixed blend of at least one polyolefin, at least one vinyl alcohol polymer that is incompatible with the one or more polyolefins, and at least one polymeric compatibilizing agent that serves to adhere together domains of the incompatible polymers, such that the vinyl alcohol polymer portion exists in a discontinuous phase that is distributed in the polyolefin continuous phase. The discontinuous vinyl alcohol polymer phase exists in a laminar configuration, meaning that it comprises a multitude of domains in the form of thin, substantially parallel, and overlapping layers of material that are embedded in the continuous polyolefin phase. The presence of these domains improves the barrier properties of the unmodified polyolefin by creating an extended maze through which hydrocarbons or other substances must pass if they are to permeate or diffuse through the wall of the pipe. The composition is made by mixing together particles of the polymers, heating the mixture to yield a heterogeneous melt of material, and forming the melt in a way that results in stretching the melt to yield an elongated discontinuous phase.

The presence of the laminar configuration of the discontinuous vinyl alcohol polymer phase means that smaller amounts of vinyl alcohol polymer are required to achieve a given degree of permeation resistance than would be obtained from a homogeneous blend. Homogeneous well-mixed blends are only partially effective until large quantities (e.g. >50%) of vinyl alcohol polymer are present, which then becomes cost prohibitive for these applications. Coextrusion construction of liners, would require additional investment for additional extruders for each polymer type as well as some sort of "adhesive layer" to bind the incompatible materials. The current invention bypasses these traditional and more costly approaches by using a single step extrusion in a manner that allows for significantly reduced amounts of vinyl alcohol polymer.

The pipes of the present invention have reduced permeability to hydrocarbons relative to polyolefin pipes. An advantage of using the pipes of the present invention in the form of liners to line metal pipes used in the oil and gas industry is that the likelihood of system failure due to liner collapse is reduced. This collapse is most often triggered by the accumulation in the annulus of fluids that have permeated or diffused through the liner from the materials being transported by or stored in the pipe. Such fluids may exist in either gas or liquid phase depending upon conditions in the annulus. For the most part, an equilibrium is in effect; the fluid pressure within the pipe is generally greater than or equal to the annular pressure. However, in the course of normal operations, the pressure within the pipe may be reduced to substantially less than the annular fluid pressure, such as in an unplanned shutdown. The resulting pressure differential may allow an expansion of the annular fluid to occur as the pressures attempt to equalize. If the liner is unable to withstand the external stress on its own, radial buckling can result.

In one embodiment, the polymer particles, in unmelted form, are mixed thoroughly so as to provide a statistically homogeneous distribution and care must be exercised to avoid substantial additional mixing after the polymers have been heated to a melt. In another embodiment, the polymer particles can be combined in softened or molten form so long as the combination of polymers maintains a heterogeneous character. Combining the polymers at a temperature such that one of the polyolefin or the vinyl alcohol polymer is not softened or molten and then heating the combination can also establish the blend. It is preferable that a melted heterogeneous blend of incompatible polymers be established so that, when the melt is stretched, such as by extrusion forces, the polyolefin is in the form of a continuous matrix phase and the vinyl alcohol polymer is in the form of a discontinuous distributed phase. The discontinuous phase is present as a multitude of thin, substantially parallel and overlapping layers embedded in the continuous phase.

The vinyl alcohol polymer and compatibilizer may also be melt-blended (using any method known to those skilled in the art, such as compounding) prior to mixing with the polyolefin component. Thus, for example, melt-blended particles comprising vinyl alcohol polymer and compatibilizer may be mixed with polyolefin particles as described.

It is believed that at least some of the polymeric compatibilizer is concentrated between adjacent layers of incompatible polymer and is joined partially with one layer and partially with an adjacent layer, thus adhering the layers together. Without the compatibilizer, pipes formed from heterogeneous melts of incompatible polymer have poor mechanical properties and, generally, cannot even be easy formed by extrusion or molding as unitary articles.

Although it is not required, it is preferred that the vinyl alcohol polymer used in the practice of this invention be, as stated, in particulate form; and it is desired that both the polyolefin and the vinyl alcohol polymer should be mixed as particles. The particles should, as a general rule, be of a size such that the molten blend of incompatible polymers, when introduced to some melt stretching means, such as extrusion die lips, exhibits the heterogeneity preferred for the practice of the invention. When the particles, especially particles of the vinyl alcohol polymer, are of too small a size, the melted blend, even though not excessively mixed, tends to function as a homogeneous composition because the domains of material making up the discontinuous polymer phase are so small. When the particles, especially particles of the vinyl alcohol polymer, are of too large a size, the melted blend tends to form into pipes having a marbleized structure rather than a laminar structure, the large domains of the materials that would make up the discontinuous phase extending to opposite boundaries of the pipe and causing disruption of the material that would make up the continuous phase. The particles are preferably generally regular in shape, such as cubical or spherical. The particles may, however, be irregular; and they may have one dimension substantially greater than another dimension such as would be the case, for example, when flakes of material are used.

When each of the incompatible polymers is present as individual particles, the particles are generally of approximately the same size although such is not required. The compatibilizer can be provided by itself as individual particles or it can be mixed into, coated onto, or otherwise combined with one or both of the incompatible polymers.

The thickness of the layers of material in the discontinuous phase is a function of the particle size combined with the degree of stretching in the forming step. The particle size of the vinyl alcohol polymer is generally selected with a view toward resulting, after stretching, in overlapping layers which can be from 0.5 to 50 micrometers thick and, perhaps, sometimes slightly thicker.

Mixing particles of polymers can be accomplished by any of the means known to those skilled in the art, such as by means of a blender or a tumble mixer or, on a larger scale, by means of a double-cone blender. Continuous mixing of the particles can be accomplished by any of several well-known methods. Of course, the particles can also be mixed by hand with the only requirement of the mixing being that any two statistical samplings of the mixture in a given mass of material should yield substantially the same composition. The mixing of the incompatible polymers can be accomplished by adding particles of the higher melting polymer to a melt of the lower melting polymer maintained at a temperature below the higher melting point. In that case, the melt is agitated to obtain an adequate mixture; and the mixture is thus ready for the heating step.

Once mixed, the incompatible polymers are heated to a temperature greater than the melting point of the highest melting polymer component. It is noted that the heating is conducted for the purpose of stretching the softened or melted blend. In the case of an incompatible polymer that exhibits no well-defined melting temperature, "melting temperature", as used here, refers to a temperature at least high enough that the polymers have been softened to the degree required to stretch each of the polymers in the blend. That heating results in a softened or melted heterogeneous blend of materials and the heating must be conducted in a manner that avoids substantial additional mixing of the incompatible polymers because such mixing could cause a homogenization and combination of the melted particles and could result in a melt and a pipe of homogeneous, unlayered, composition. The heating can be conducted by any of several means well-known to those skilled in the art and is usually conducted in an extruder. It has been learned that a single-screw extruder of the type that is designed for material transport and not material mixing can be used between the heating and forming steps of this invention without causing homogenization of the two phase incompatible polymer composition. Low shear and low mixing extruders of the kind normally used for polyvinyl chloride, acrylonitrile, or polyvinylidene chloride can be used to practice this invention if they are used in a way to melt and transport the materials and minimize mixing of the components. High shear and high mixing extruders of the kind normally used for nylon and polyethylene are less desirable to practice this invention. Numerous other low shear melt blending devices, as known to those skilled in the art, can be used without departing from the spirit of the invention. To the extent that the composition retains an aspect of heterogeneity, the process and the product of this invention can be realized.

The process of forming the pipes of the invention requires stretching of the melted blend followed by cooling. Stretching is an elongation of the two-phase melt to cause a substantial change in the dimensions of the domains in the discontinuous phase. Stretching can be accomplished by any of several means, or by a combination of more than one such means. For example, the melt can be extruded or coextruded between die lips. The stretching can be accomplished by a slight drawing following the extrusion or coextrusion of the blend of the heterogeneous melt.

The stretching can be in one direction or in perpendicular directions. Whether the stretching is conducted in one direction or two, there should be an elongation of from 100 to 500 percent in at least one direction; and an elongation of from 100 to 300 percent is preferred. While the upper limit set out herein is not critical, the lower limit is critical insofar as inadequate stretching does not yield the improved barriers to fluid permeation which characterize this invention. Avoidance of excessive stretching is important only insofar as excessive elongation of the melt may lead to weakening or rupture of the article.

Stretching is followed by cooling to below the temperature of the melting point of the lowest melting component to solidify the extruded part. The cooling can be conducted by any desired means and at any convenient rate.

The one or more vinyl alcohol polymers of the composition used in this invention are present in 2 to 40 or preferably 3 to 20, or more preferably 5 to 15 weight percent based on the total amount of vinyl alcohol polymer, compatibilizer, and polyolefin in the composition. The one or more compatibilizing agents of the composition used in this invention are present in 0.25 to 15, or preferably 0.25 to 10, or more preferably 0.5 to 8 weight percent based on the total amount of vinyl alcohol polymer, compatibilizer, and polyolefin in the composition. The one or more polyolefins of the composition used in this invention are present in 60 to 97, or preferably 80 to 97, or more preferably 85 to 95 weight percent based on the total amount of vinyl alcohol polymer, compatibilizer, and polyolefin in the composition.

Any of the components can be used to introduce inert fillers into the composition provided only that the fillers are not of a kind or in an amount that would interfere with formation of the layered construction or with the desired or required' properties of the composition. Amounts of plasticizers, opacifiers, colorants, lubricating agents, heat stabilizers, oxidation stabilizers, that are ordinarily used in structural polymeric materials can be used herein. The amount of such filler is not included in the calculation of amounts of incompatible polymers and compatibilizers.

The polyolefins used in the composition of the invention include polyethylene, polypropylene, polybutylene, copolymers of those materials. Polyethylene is preferred and may be high, medium, or low density.

The polyolefin may also be cross-linked during or after the formation of the pipes of the present invention using any method known to those skilled in the art. For example, if cross-linking is to occur during the formation of the pipes, a cross-linking agent such as a peroxide may be added to the mixture of polymer particles that is used to form the pipes. The peroxide may be added in the form of a masterbatch in the vinyl alcohol polymer and/or polyolefin. The peroxide may also be incorporated into the vinyl alcohol polymer and/or polyolefin particles in a previous step, such as a melt-compounding or other melt-mixing step. After the formation of the pipes, the polyolefin component may also be cross-linked by irradiating the pipes. Alternatively the polyolefin component may be cross-linked using a silane cross-linking agent such as vinyltrimethoxysilane as will be understood by those skilled in the art. When silane cross-linking agents are used, they and any necessary catalysts and initiators may be added to the molten blend during the formation of the pipes. In such a case, it is preferred that the vinyl alcohol copolymer and compatibilizer be melt-blended prior to mixing with the polyolefin. Silane cross-linking agents may also be grafted to the polyolefin prior to the use of the polyolefin in the formation of the pipes of the present invention. The polyolefins in pipes containing cross-linking agents may be cross-linked using methods known to those skilled in the art, such as by treating pipes with water or steam that is at least 80 °C. Pipes comprising cross-linked polyethylene are preferred.

When used herein, the term "vinyl alcohol polymer" refers to one or more polymers containing 40 to 100 mole percent of repeat units derived from vinyl alcohol. The vinyl alcohol polymer may contain up to 60 mole percent of repeat units derived from other olefins such as one or more of ethylene, propylene, other α-olefins, or vinyl acetate. C₃-C₁₂ α-olefins and vinyl acetate are preferred. Ethylene is more preferred. Preferred vinyl alcohol polymers are ethylene/vinyl alcohol copolymers comprising 20 to 40 mole percent of repeat units derived from ethylene and 60 to 80 mole percent of repeat units derived from vinyl alcohol. More preferred ethylene/vinyl alcohol copolymers comprise 23 to 34 mole percent of repeat units derived from ethylene and 66 to 77 mole percent of repeat units derived from vinyl alcohol. Preferred ethylene/vinyl alcohol copolymers may also comprise up to 20 mole percent of repeat units derived from vinyl acetate.

The pipes of the present invention may further comprise one or more polyamides in the discontinuous phase. If present, the polyamides will comprise up 70 weight percent of the total amount of vinyl alcohol polymer and polyamide and they will preferably be present in 15 to 50 weight percent, or more preferably 25 to 35 weight percent, based on the total amount of vinyl alcohol polymer and polyamide. The polyamides may be melt-blended with the vinyl alcohol polymer using melt-compounding or other melt-mixing method prior to the formation of the pipes of the present invention, or particles of polyamide may be used directly. Example of suitable polyamides include poly(pentamethylene adipamide) (polyamide 5,6), poly(hexamethylene adipamide) (polyamide 6,6), poly(hexamethylene azelaamide) (polyamide 6,9), poly(hexamethylene sebacamide) (polyamide 6,10), poly(hexamethylene dodecanoamide) (polyamide 6,12). Also suitable are polyamides obtained from lactams such as caprolactams and from amino acids such as 11-aminoundecanoic acid. Examples are polycaproamide (polyamide 6), poly(11-aminoundecanoamide) (polyamide 11), and polydodecanoamide (polyamide 12). Copolyamides such as poly(hexamethylene dodecanoamide), and copolymers of poly(hexamethylene adipamide) with polycaproamide are also suitable. Also preferred are amorphous polyamide copolymers that do not have clearly-defined melting points, but which are derived in part from aromatic monomers such as isophthalic acid. Semi-aromatic polyamides derived from terephthalic acid and/or isophthalic acid that are melt extrudable are also suitable.

It is preferred that the vinyl alcohol polymer and polyamide, if present, have a higher melt viscosity than the polyolefin at the temperature at which the pipes of the present invention are formed.

The compatibilizer used in the composition used in this invention is an alkylcarboxyl-substituted polyolefin, which is a polyolefin that has carboxylic moieties attached thereto, either on the polyolefin backbone itself or on side chains. By "carboxylic moiety" is meant carboxylic groups from the group consisting of acids, esters, anhydrides, and salts. Carboxylic salts are neutralized carboxylic acids and a compatibilizer, which includes carboxylic salts as a carboxylic moiety also, includes the carboxylic acid of that salt. Such compatibilizers are termed ionomeric polymers.

Compatibilizers can be prepared by direct synthesis or by grafting. An example of direct synthesis is the polymerization of an α-olefin with an olefinic monomer having a carboxylic moiety; and an example of grafting is the addition of a monomer having a carboxylic moiety to a polyolefin backbone. In the compatibilizer made by grafting, the polyolefin is polyethylene or a copolymer of ethylene and at least one α-olefin of 3-8 carbon atoms such as propylene, or a copolymer including at least one α-olefin of 3-8 carbon atoms and a diolefin, such as 1,4-hexadiene. The polyolefin is reacted with an unsaturated carboxylic acid, anhydride, or ester monomer to obtain the grafted polymer. Representative eligible acids, anhydrides, and esters include: methacrylic acid; acrylic acid; ethacrylic acid; glycidyl methacrylate; 2-hydroxy ethylacrylate; 2-hydroxy ethyl methacrylate; diethyl maleate; monoethyl maleate; di-n-butyl maleate; maleic anhydride; maleic acid; fumaric acid; itaconic acid; monoesters of such dicarboxylic acids; dodecenyl succinic anhydride; 5-norbornene-2,3-anhydride; nadic anhydride (3,6-endomethylene-1,2,3,6-tetrahydrophthalic anhydride). Generally, the graft polymer will have from 0.01 to 20, preferably 0.1 to 10, and most preferably 0.2 to 5, weight percent graft monomer. Grafted polymers are described in greater detail in U.S. Pat. Nos. 4,026,967 and 3,953,655.

In the compatibilizer made by direct synthesis, the polymeric material is a copolymer of an α-olefin of 2-10 carbon atoms and an α,β-ethylenically unsaturated carboxylic acid, ester, anhydride, or salt having 1 or 2 carboxylic moieties. The directly synthesized compatibilizer is made up of at least 75 mole percent of the olefin component and from 0.2 to 25 mole percent of the carboxylic component.

Ionomeric compatibilizer is preferably made from directly synthesized compatibilizer and is preferably made up of 90 to 99 mol percent olefin and 1 to 10 mol percent α,β-ethylenically unsaturated monomer having carboxylic moieties wherein the moieties are considered as acid equivalents and are neutralized with metal ions having valences of 1 to 3, inclusive, where the carboxylic acid equivalent is monocarboxylic and are neutralized with metal ions having a valence of 1 where the carboxylic acid equivalent is dicarboxylic. To control the degree of neutralization, metal ions are present in an amount sufficient to neutralize at least 10 percent of the carboxyl moieties. Representative eligible α-olefins and unsaturated carboxylic acid, anhydride, and ester monomers are those previously herein described. Ionomeric polymers are described in greater detail in U.S. Pat. No. 3,264,272.

Preferred compatibilizers are polyolefins grafted with a dicarboxylic acid or dicarboxylic acid derivative such as an anhydride or ester or diester.

The pipes of the present invention have uses that include, but are not limited to, line pipes, flexible pipes, down-hole casing, down-hole casing liners, distribution piping, sucker rods, siphon strings, horizontal piping, horizontal pipe lining, hydraulic hoses, flexible pipes, and pressurized hoses. Such applications are often found in the oil and gas industry. The pipes of the present invention are particularly advantageous for use in applications where they are exposed to hydrocarbon/alcohol mixtures, such as are found in many gasoline blends, and as are commonly referred to as gasohol. They may be used as pipes to transport and store gasoline. Such pipes can be used in gas stations. They may also be used as fuel lines for internal combustion engines such as are found in automobiles and other vehicles (including trucks and motorcycles), airplanes, lawn mowers, boats. The pipes of the present invention may also be used to transport water in environments in which the exterior of the pipe is exposed to hydrocarbons, alcohols, or mixtures thereof.

## Claims

1. Use of a pipe, comprising a melt-mixed blend of:
(a) at least one polyolefin;
(b) at least one vinyl alcohol polymer incompatible with said at least one polyolefin (a); and
(c) at least one alkylcarboxyl-substituted polyolefinic compatibilizer;
wherein said polyolefins (a) are in a continuous matrix phase and said vinyl alcohol polymers (b) are present in a discontinuous distributed phase in the form of a multitude of thin, substantially parallel, and overlapping layers of material embedded in the continuous phase, and further wherein at least a portion of said compatibilizer (c) is present between said layers and promotes adhesion therebetween, for the transport of gasoline, hydrocarbon/alcohol mixtures or gasohol.

2. The use of claim 1 wherein the at least one polyolefin is selected from the group consisting of polyethylene, polypropylene, polybutylene, and copolymers of those materials.

3. The use of claim 1 wherein the at least one alkylcarboxyl-substituted polyolefinic compatibilizer is selected from the group consisting of polyolefins that have carboxylic moieties attached thereto, either on the polyolefin backbone itself or on side chains.

4. The use of claim 1 wherein the at least one vinyl alcohol polymer is poly(vinyl alcohol) or a vinyl alcohol/ethylene copolymer.

5. The use of claim 1 wherein the discontinuous distributed phase is present in layers of material more than 0.5 micrometers and less than 50 micrometers thick.

6. The use of claim 1 wherein the melt-mixed blend further comprises at least one plasticizer, at least one lubricating agent, at least one stabilizer, and/or polyamide.

7. The use of claim 1 wherein the at least one vinyl alcohol polymer is present in 2 to 40 weight percent, the at least one polyolefin is present in 60 to 97 weight percent, and the at least one alkylcarboxyl-subsituted polyolefinic compatibilizing agent is present in 0.25 to 15 weight percent, where all weight percents are based on the total amount of vinyl alcohol polymer, polyolefin, and alkylcarboxyl-subsituted polyolefinic compatibilizing agent.

8. The use of claim 1 wherein the at least one alkylcarboxyl-substituted polyolefinic compatibilizer is each prepared by grafting a dicarboxylic acid or dicarboxylic acid derivative such as an anhydride, ester, or diester to a polyolefin.

9. The use of claim 1 wherein the melt-mixed blend further comprises at least one silane cross-linking agent.

10. The use of claim 1 wherein the polyolefin is cross-linked.

11. The use of claim 10 wherein the cross-linked polyolefin is cross-linked polyethylene.

12. The use of claim 1 wherein the pipe is in the form of a flexible pipe, a line pipe, a down-hole casing liner, or a fuel line.

## Patentansprüche

1. Verwendung eines Rohres, aufweisend ein schmelzflüssig gemischtes Blend von:
(a) mindestens einem Polyolefin,
(b) mindestens einem Vinylalkohol-Polymer, das mit dem mindestens einen Polyolefin (a) inkompatibel ist, und
(c) mindestens einem Alkylcarboxyl-substituierten, polyolefinischen, kompatibel machenden Mittels,
wobei die Polyolefine (a) eine zusammenhängende Matrixphase sind und die Vinylalkohol-Polymere (b) in einer dispersen, verteilten Phase in Form einer Mehrzahl von weitgehend parallelen und sich überlappenden Lagen von Material vorliegen, das in der zusammenhängenden Phase eingebettet ist und worin ferner mindestens ein Teil des kompatibel machenden Mittels (c) zwischen diesen Lagen vorliegt und die Haftung zwischen ihnen fördert, zum Transport von Benzin, Kohlenwasserstoff/Alkohol-Mischungen oder Gasohol.

2. Verwendung nach Anspruch 1, wobei das mindestens eine Polyolefin ausgewählt ist aus der Gruppe, bestehend aus Polyethylen, Polypropylen, Polybutylen und Copolymeren dieser Materialien.

3. Verwendung nach Anspruch 1, wobei das mindestens eine Allcylcarboxyl-substituierte, polyolefinische, kompatibel machende Mittel ausgewählt ist aus der Gruppe, bestehend aus Polyolefinen, die daran angebracht Carboxyl-Teile haben, und zwar entweder an dem Polyolefin-Grundgerüst selbst oder an Seitenketten.

4. Verwendung nach Anspruch 1, wobei das mindestens eine Vinylalkohol-Polymer Poly(vinylalkohol) ist oder ein Vinylalkohol/Ethylen-Copolymer.

5. Verwendung nach Anspruch 1, wobei die disperse, verteilte Phase in den Lagen des Materials mit einer Dicke von mehr als 0,5 Mikrometern und weniger als 50 Mikrometern vorliegt.

6. Verwendung nach Anspruch 1, wobei das schmelzflüssig gemischte Blend ferner mindestens einen Weichmacher aufweist, mindestens ein Gleitmittel, mindestens ein Stabilisiermittel und/oder Polyamid.

7. Verwendung nach Anspruch 1, wobei das mindestens eine Vinylalkohol-Polymer mit etwa 2% bis 40 Gew.% vorliegt, das mindestens eine Polyolefin mit 60% bis 97 Gew.% vorliegt und das mindestens eine Alkylcarbonyl-substituierte, polyolefinische, kompatibel machende Mittel mit 0,25% bis 15 Gew.% vorliegt, wobei alle Prozentangaben auf die Gesamtmenge von Vinylalkohol-Polymer, Polyolefin und Alkylcarboxyl-substituiertem, polyolefinischen, kompatibel machenden Mittel bezogen sind.

8. Verwendung nach Anspruch 1, wobei das mindestens eine Alkylcarboxyl-substituierte, polyolefinische, kompatibel machende Mittel jeweils hergestellt ist durch Pfropfen einer Dicarbonsäure oder eines Dicarbonsäurederivats, wie beispielsweise ein Anhydrid, Ester oder Diester, auf ein Polyolefin.

9. Verwendung nach Anspruch 1, wobei das schmelzflüssig gemischte Blend ferner mindestens ein Silan-Vernetzungsmittel aufweist.

10. Verwendung nach Anspruch 1, wobei das Polyolefin vernetzt ist.

11. Verwendung nach Anspruch 10, wobei das vernetzte Polyolefin vernetztes Polyethylen ist.

12. Verwendung nach Anspruch 1, wobei das Rohr die Form eines flexiblen Rohres annimmt, einer Rohrleitung, einer Bohrlochauskleidung oder einer Kraftstoffleitung.

## Revendications

1. Utilisation d'un tuyau, comprenant un mélange mélangé par fusion:
a) d'au moins une polyoléfine;
b) d'au moins un polymère d'alcool de vinyle incompatible avec ladite au moins une polyoléfine (a); et
c) d'au moins un agent de compatibilité polyoléfinique substitué par des groupes alkylcarboxyles;
dans laquelle lesdites polyoléfines (a) sont dans une phase de matrice continue et lesdits polymères d'alcool de vinyle (b) sont présents dans une phase distribuée discontinue sous la forme d'une multitude de couches minces, substantiellement parallèles et se chevauchant, d'un matériau noyé dans la phase continue, et en outre dans laquelle au moins une portion dudit agent de compatibilité (c) est présente entre lesdites couches et favorise l'adhérence entre celles-ci, pour le transport d'essence, de mélanges d'hydrocarbure/alcool ou d'essence-alcool.

2. Utilisation suivant la revendication 1, dans laquelle la au moins une polyoléfine est choisie dans le groupe constitué de polyéthylène, de polypropylène, de polybutylène et de copolymères de ces matériaux.

3. Utilisation suivant la revendication 1, dans laquelle le au moins un agent de compatibilité polyoléfinique substitué par des groupes alkylcarboxyles est choisi dans le groupe constitué de polyoléfines qui possèdent des fractions carboxyliques attachés à celles-ci, soit sur le squelette de polyoléfine lui-même, soit sur les chaînes latérales.

4. Utilisation suivant la revendication 1, dans laquelle le au moins un polymère d'alcool de vinyle est un poly(alcool de vinyle) ou un copolymère d'alcool de vinyle/éthylène.

5. Utilisation suivant la revendication 1, dans laquelle la phase distribuée discontinue est présente en couches de matériau de plus de 0,5 micromètre et de moins de 50 micromètres d'épaisseur.

6. Utilisation suivant la revendication 1, dans laquelle le mélange mélangé par fusion comprend en outre au moins un plastifiant, au moins un agent lubrifiant, au moins un stabilisant et/ou un polyamide.

7. Utilisation suivant la revendication 1, dans laquelle le au moins un polymère d'alcool de vinyle est présent dans de 2 à 40 pour-cent en poids, la au moins une polyoléfine est présente dans de 60 à 97 pour-cent en poids et le au moins un agent de compatibilité polyoléfinique substitué par des groupes alkylcarboxyles est présent dans de 0,25 à 15 pour-cent en poids, où tous les pourcentages en poids sont basés sur la quantité totale de polymère d'alcool de vinyle, de polyoléfine et d'agent de compatibilité polyoléfinique substitué par des groupes alkylcarboxyles.

8. Utilisation suivant la revendication 1, dans laquelle le au moins un agent de compatibilité polyoléfinique substitué par des groupes alkylcarboxyles est chacun préparé par le greffage d'un acide dicarboxylique ou d'un dérivé d'acide dicarboxylique tel qu'un anhydride, un ester ou un diester sur une polyoléfine.

9. Utilisation suivant la revendication 1, dans laquelle le mélange mélangé par fusion comprend en outre au moins un agent de réticulation de silane.

10. Utilisation suivant la revendication 1, dans laquelle la polyoléfine est réticulée.

11. Utilisation suivant la revendication 10, dans laquelle la polyoléfine réticulée est un polyéthylène réticulé.

12. Utilisation suivant la revendication 1, dans laquelle le tuyau est sous la forme d'une conduite flexible, d'une conduite de canalisation, d'une doublure de revêtement fond de trou ou d'une canalisation de carburant.
